# EUROPEAN PATENT APPLICATION

(11) **EP 1 319 445 A2**
(43) Date of publication of application: **18.06.2003**
(21) Application number: 02380253.1
(22) Date of filing: 09.12.2002
(51) Int. Cl.: B05C 5/00, C04B 41/00, B27N 7/00

(54) **A machine for the automatic resinning of flat boards or parts for construction**

(30) Priority: 14.12.2001 ES 200102788; 22.05.2002 ES 200201174
(71) Applicant: Munoz Albinana, José, 12580 Benicarlo-Castellon (ES)
(72) Inventor: Munoz Albinana, José, 12580 Benicarlo-Castellon (ES)
(74) Representative: Manzano Cantos, Gregorio

(57) **Abstract**

A MACHINE FOR THE AUTOMATIC RESINNING OF BOARDS OR FLAT PARTS FOR CONSTRUCTION, installed over the bedplate (1) of a roller conveyor (2) and supported by a set of vertically displaceable telescopic columns (3,4) supporting corresponding driving equipment for the actuation of a resinning device, provided with adjustable and uniform distribution means, over the surface of the board or slab (P) of the corresponding resin, which is fed through said device by a vertical conduit (18) primed by means of a set of electro-valves (15) for a controlled, fixed amount proportional to the size of the slab or board (P), automatically by means of a rod probe on said resinning device and actuated by the passage of the slabs dragged by the corresponding conveyor and that a double action version has a double equipment of resinning platforms located on the same horizontal plane.

## Description

As indicated in the title, the invention refers to a machine for the application of resin or resinning of boards, slabs or similar or flat parts for construction.

As is known in the world of marble, natural or artificial stone, the panels to cover surfaces in general, and floors in particular, are treated by means of a synthetic material coating to strengthen them against the wear caused by grazing, scratching, impacts and so on.

This coating consists of a polyester resin applied in a liquid state with a viscosity pertaining to this type of product, generally as paste or extended over the surface of the board, slab or similar and is left to cool or set to harden making a single body with the latter, evidently due to the porous condition of the ceramic materials used for their manufacture.

The application should be performed proportionally and uniformly, such that all the parts are equally covered compensating surface differences, above all filling the pores, to a greater or lesser depth of the board surface.

However, in practice, it could basically be considered that with the same means, the same equipment and with identical features and with the improvements proposed by this option, it is possible to significantly improve the performance of the machine until achieving doubling its production since, with said improvements, it is possible to assemble and move a double set of resinning platforms or plates in a synchronized manner.

### BACKGROUND OF THE INVENTION

As far as is known, regarding the state-of-the-art, no machine exists especially applied for this purpose. Other machines exist which are intended to coat flat surfaces with varnish or other substances, but not for resin for boards or flat parts for construction and one with the features proposed by the invention.

Until now, the application of resins for this type of product is done manually. The board is made to pass through a conveyor belt and some operators coat it manually using a spatula.

By guesswork, they unload an amount of resin on the board. The resin is then spread over the surface with a spatula until covering it. The uniform, complete and proportioned coating of the board will depend on the operators' expertise.

For the latter to be performed effectively, it should be done with the necessary time. The concentration dedicated causes a considerable waste of time and an excessive use of personnel for the type of work involved.

### INVENTIVE STEP

The object and scope of the invention are evident. It involves the conversion of a traditionally manual operation into a mechanised, automated, adjusted and controlled one. Hence, a calculated dosing of the product applied for the coating is permitted by the invention, as well as an automatic, uniform and perfect distribution with recovery of the residual product if necessary, and by maintaining the entire structure of the machine, identical feeding means and the same transmission and application means, it is possible to duplicate the resinning components, thereby duplicating the machine's function, production and performance, logically re-dimensioning its measurements, enlarging the conveyor belt and incorporating complementary transmission means permitting the synchronized actuation of both resin distributors with the same and single reducer motor.

### DESCRIPTION OF THE INVENTION

The machine object of the invention is supported by two columns leaning on the bedplate of a roller conveyor that may be the roller conveyor of a machine assembly applied to the general treatment of boards or ceramic slabs destined to construction.

According to the invention, some columns support the chassis to support the driving means for actuating the device for the automatic resinning of the surfaces of said boards conveyed by rollers, including adaptation for the resin dosing apparatus and an end-of-run rod probe for starting the resinning device when actuated by the board. A probe related to the resin feed electro-valve system have a fixed frequency, so that if the probe is not actuated by the passage of the new board, the feeder is not actuated.

The resinning device according to the invention, consists of a preferably circular platform connected by its respective rotational shaft to the actuation driving means. A rotation shaft is assembled perpendicular to the platform on the upper side with respective arrester and bearing packings and across the corresponding reducer for rotation or controlled speed. A vertically adjustable device approach the board at the convenient distance so that the resinning means of said device effectively act over the board surface.

Some resinning means according to the invention, are assembled on the lower base of said platform. Consisting of four or more arms arranged in crossarm or other suitable radial arrangement. The arms are formed by guide sections where both support members are housed for some trowels or scrapers of an anti-corrosive resistant and elastomer material, with measurements equivalent to the radius of the board or ceramic slab, such that sweeping of the surface is complete. Some scrapers or trowels are fastened by clamping to said support by means of a strip or complementary strip fastened to the support by means of transverse bolts, so that the leading edge of the scrapers have a suitable profile, such that said sweeping is uniform and deep, such that both the surface in its area and the pores with all their irregularities are equally covered by resin. Preferably, this profile is chamfered at 45° at the lower edge of the scrapers orientated in the rotation direction of the resinning device.

According to the invention, there are some resinning means whose actuation shaft is a tubular shaft open at its lower end and protruding beneath the circular platform and across which the resin feeder has access, being a coaxial tube which is vertically extended to the upper part of the machine housing or body, where there is a nozzle connected by tubular means to an electro-valve dosing device having programmed resin discharges according to the board surface to be resinned and logically connected to a resin deposit. In this way, the amounts of resin deposited on the board surface are always the same. The type of resinning is controlled by the conveyor speed and operation of the resinning device and feeder are synchronised with the starting probe.

Another aspect of the invention is that the vertical adjustment of the resinning device to approach it to the board or slab, is carried out by means of the support columns synchronised by means of a manual or mechanical adjustment device, located in the upper end of one of the columns and which actuates a transmission means such as a chain, to actuate the other column in a synchronised manner. Said columns consist of two parts telescopically assembled by means of a respective set of plug-socket screw spindle, which on actuating the transmission means, displace the socket part and the socket part displacing the resinning device from an elevated top position to another lower top position to approach it to the required distance, logically by the thickness or height of the board or slab. The plug member is assembled on some columns over a support base and pivoted on a corresponding bushing, such that on rotating, it makes the socket part of said column move upwards or downwards, as required. A socket part has lower chassis support means for the motor actuation means and other upper cross beam support means to reinforce the structure. The lower means are extended towards the opposite part, where an intermediate partition is installed to configure the reinforced structure for a casing which covers the assembly and over whose roof the resin deposit is installed for easy refilling.

Another detail of the invention is that it takes advantage of the mechanical solution of the machine, such that the transmission shaft of the motor reducer is axially located in the centre of the support cross beams thereof, and of a lower, parallel beam where the rest of the transmission means are installed, in this case composed of two other parallel tubular shafts, equidistant to the axial transmission shaft which are the actuation shafts of the respective circular resinning plates or platforms, and a fourth shaft, located adjacent to the axial drive shaft and imbedded between the latter and one of the sides and another one of the sides.

According to the invention, a fourth or adjacent shaft has a transmission gear meshed with another analogue which has the axial drive transmission shaft connected to the transmission and actuation of the parallel tubular shafts through corresponding transmission lines; specifically, chains linking through respective crowns in a coplanar arrangement in said drive shafts and in the actuating tubular shafts of the platforms connected in tandem, each one with its respective main and concatenated drive shaft.

Parallel actuation shafts of respective resinning plates or platforms, located on the same plane, equidistant such that their rotation does not provoke tangential frictions of their scrapers due to the contrary rotational direction of the rotation of each platform since the concatenated connection produces reversed rotations of each shaft and, therefore, of each platform since, as in the main solution, each shaft is fed through respective coaxial tubular conduits.

According to this option, coaxial conduits possibly coming directly from a common deposit, in each case provided with corresponding regulating and dosing electro-valves; coming from respective independent deposits also provided with their corresponding electro-valves or with one common deposit or two independent ones, by means of a common by pass divided feeder to each one of the feeding tubes.

Another detail of this version is that the respective transmission lines for the actuation shafts have tensing means constituted of a vertical shaft tangent to each line, provided with an eccentric horizontal cam which, according to its radius, applies more or less pressure against it.

Another detail of this version is that the actuating wheel of the column screw spindles is laterally located on an end of the transmission bar for actuating both screw spindles, and in each case, being provided with a gear box assembled on the upper end of each screw spindle. A set of gears preferably integrated by a pair of bevel pinions in each case. The placement is motivated by the largest space intended for the feed deposit on the machine casing.

A better idea of the features of the invention will be given below by referring to some drawings attached to this specification, which in a schematic manner and as an example, show the preferred details of the invention.

### IN THE DRAWINGS

Figure 1 shows a transverse elevation view of the machine seen inside.

Figure 2 shows a vertical view, partially sectioned by the line I-I of the resinning device.

Figure 3 shows a lower plan view of the circular platform of the resinning device.

Figure 4 shows a vertical and partial sectional view of one of the columns displaceable for the resinning device.

Figure 5 shows a vertical, partial detail longitudinally sectioned by the line III of Figure 3.

Figure 6 shows a closeup and partially sectioned view of a detail-C of Figure 1.

Figure 7 shows a closeup and partially sectioned view of detail-A of Figure 6.

Figure 8 shows a closeup view of detail-B of Figure 6.

Figure 9 shows a front elevation view of the machine covered by the corresponding casing.

Figure 10 shows a side elevation view at 90° of Figure 9.

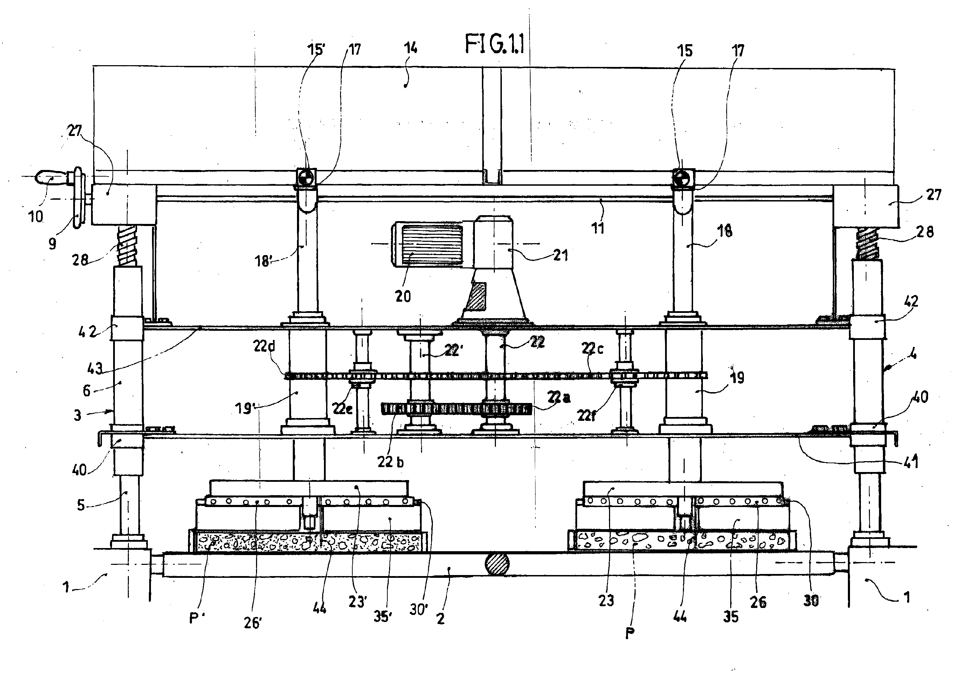

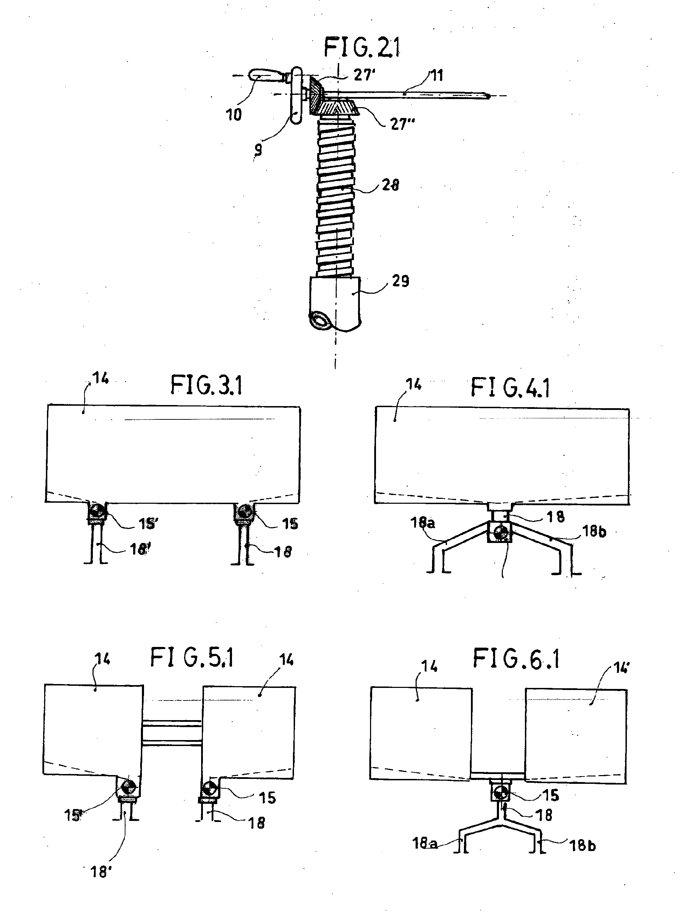

Figure 11 shows an upper plan view at 90° of Figure 9.

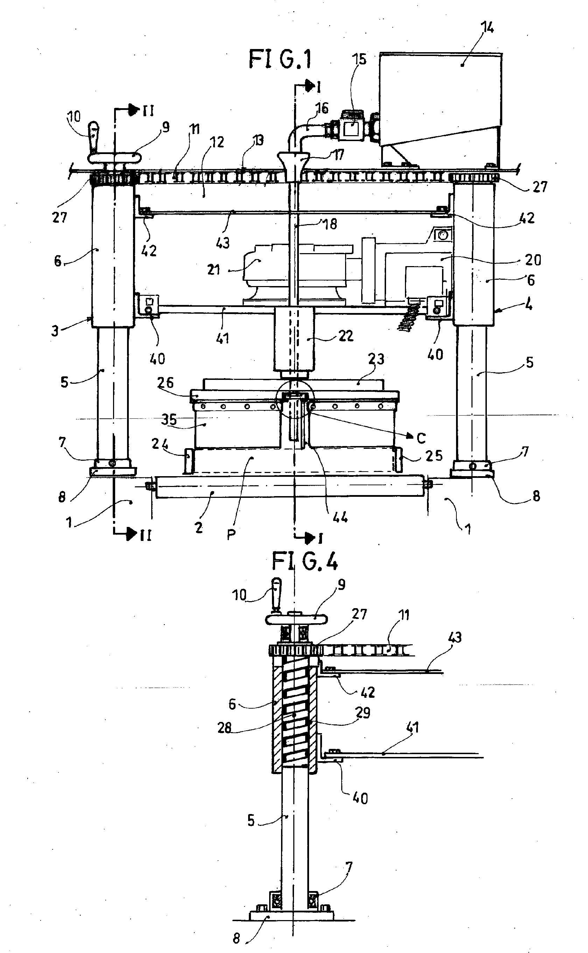

Figure 1.1 shows a front elevational view of the two platform machine assembly from one end in the sense of the running thereof.

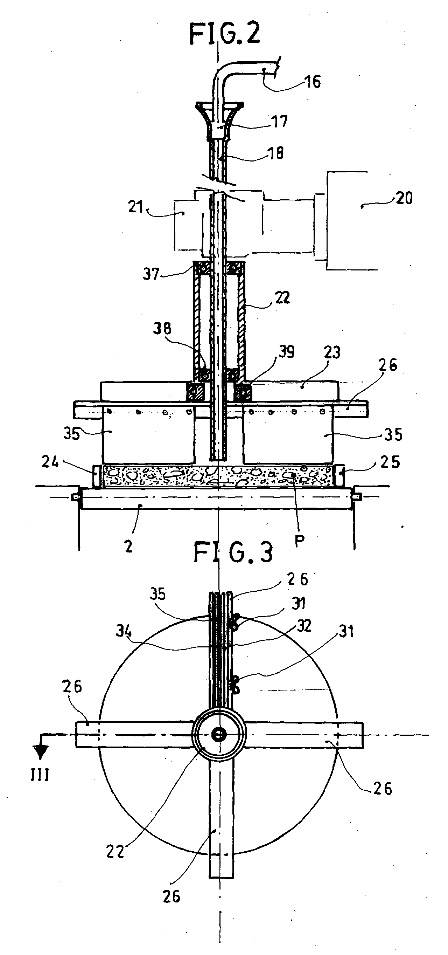

Figure 2.1 shows a detail of the manoeuvre control gearbox for adjusting the height of the columns and the rotating platforms of the machine in figure 1.1, where applicable.

Figure 3.1 shows a detail of the single resin deposit of the machine in figure 1.1 with two feeding conduits.

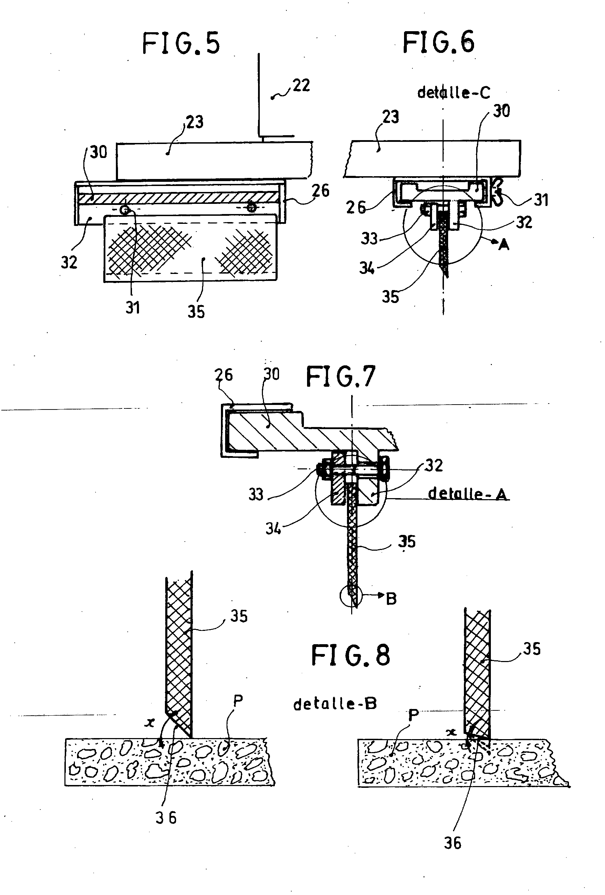

Figure 4.1 shows a detail of the single resin deposit of the machine in figure 1.1 with one conduit and a feeding by pass.

Figure 5.1 shows a detail of the two deposits of the machine in figure 1.1 with a respective feeding conduit in each one.

Figure 6.1 shows a detail of the two deposits of the machine in figure 1.1 with a single and by pass feeding conduit.

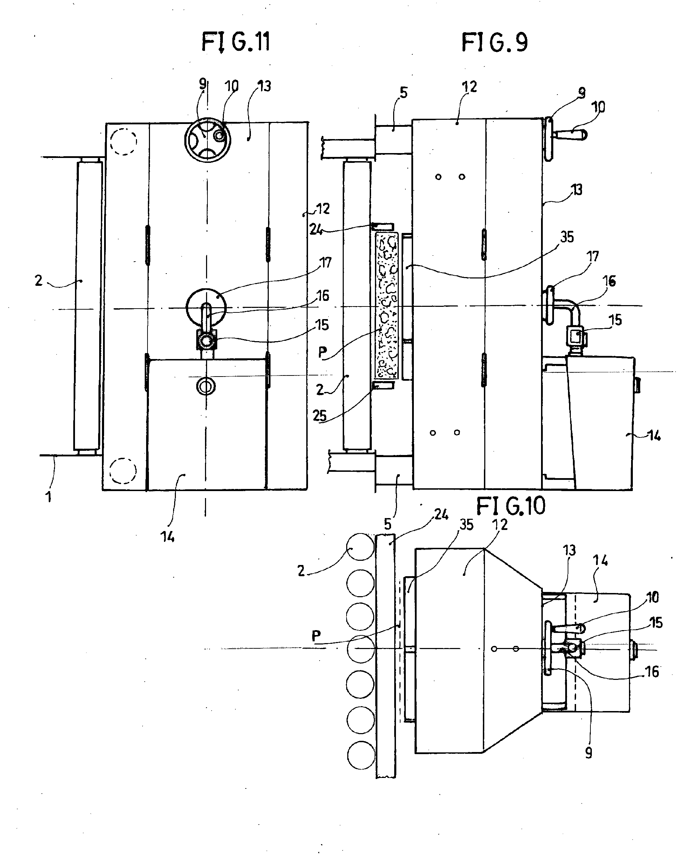

Figures 7.1, 8.1 and 9.1 show side elevational, front and plan views of the machine in figure 1.1 covered by the machine casing.

### PREFERRED EMBODIMENT OF THE INVENTION.

An example of a preferred embodiment of the resinning machine for boards, slabs or flat ceramic parts or for construction is shown in the mentioned drawings and identified by different alpha-numerical references indicating assemblies and parts thereof in an evident way.

The bedplate (1) of a roller conveyor (2) supports the set of vertical columns (3) and (4), consisting of two parts, a fixed rotational part (5) pivoted on the base (7) of the support foot (8) and a mobile part (6), movable on the fixed part (5) by means of a respective set of plug screw spindle (28) attached to the fixed part (5) and socket (29) attached to the mobile part (6). Fixed parts (5) of the columns (3) and (4) co-ordinated by means of a transmission means (11), for example a chain which meshes with respective crowns (27) of each fixed part (5) in one of which over the upper end the corresponding actuation steering wheel (9) is located provided with a handle (10) for manual actuation or provided with the corresponding means for optional driving equipment or driving connection to automatically move the actuation means (9).

According to Figure 1, an actuation means (9) makes the fixed rotational part (5) to rotate, which by means of the plug (28) and socket (29) screw spindle, vertically displaces the mobile part (6) of the columns (3) and (4) and adjust the resinning device height over the boards, slabs or flat ceramic parts (P) dragged by the roller conveyor (2) and which starts when a part (P) actuates an end-of-run rod probe (44) incorporated in said resinning device.

A resinning device is assembled in the central part of a chassis (41) supported by members (40) fitted on the mobile parts (6) of the columns (3) and (4) on which the driving (20) and reducer (21) actuation means are also fixed, controlling said resinning device consisting of a respective vertical rotation shaft (22) connected to said reducer and which is a tubular shaft, at the lower end fixed to the supporting circular platform (23) at the lower surface carrying a set of four arms (26) arranged in crossarm, which may optionally comprise more or less arms (26), radially equidistant, integrated by tubular sections in which "T" support bars (30) are guided, fastened to said arms by means of lateral bolts (31) and which in the vertical branch (32) has other transverse bolts (33) which together with some parallel strips (34) flange, firmly fastening, respective resinning trowels or scrapers (35) manufactured in a suitable elastomeric, resistant and anti-corrosive material which on the lower edge show a chamfer (36), preferably orientated at 45° in the platform rotation direction (23), so that by calculating a determined pressure of said edge (36) against the board (P) surface in relation to the height given to the resinning device, these drag the resin uniformly and press to fill all the board (P) irregularities as shown in Figure 8.

The mentioned tubular rotation shaft (22) is open at its respective upper and lower ends. Across said shaft (22) the resin feeding conduit (18) passes co-axially. Said conduit exits through the lower end of said shaft (22) and from the platform (23) and in the upper end has a nozzle (17) which exits above the ceiling (13) of the casing and is primed by means of the conduit (16) of a set of electro-valves (15) which dose the exact programmed amount of resin that should fall on each board (P), supplied by a deposit (14) located in the high part of the machine. Some electro-valves (15) are synchronised with the end-of-run rod probe (44), such that each impact will cause a discharge over the corresponding board (P), instantaneously being deactuated when the probe is not impacted by the board (P).

The approach of the resinning device and of the scrapers (35) to the board (P) surface is carried out by lowering or raising the chassis (41), which is fitted on the mobile parts (6) of the columns (3) and (4), such that when the steering wheel (9) is actuated by means of (10), the transmission chain (11) makes the plug screw spindle (28) rotate moving the socket screw spindle (29) which will be displaced upwards or downwards, as necessary, exactly adjusting the position of the rotating platform (23) and therefore, the scrapers (35) with respect to the boards or slabs.

A structure reinforcement (43) is arranged in the upper part of the mobile parts (6) leaning on two supports (42) and the general housing of the machine or casing is compartmented by a vertical separation wall (12).

Therefore, the slabs or boards (P) are dragged by the roller conveyor (2), conveniently guided between parallel tracks (24) and (25) fitted with suitable separation for the width of the boards (P). The guided passage of the boards obliges that the position with respect to the resinning device is always correct.

In the version of the machine shown in figure 1.1 and 2.1 to 9.1, the drive element (20) and corresponding reducer (21) located on the upper support (43) of the machine, axially includes a corresponding axial actuating shaft (22) actuating a corresponding transmission chain (22c) and a main gear (22a). A gear (22a) simultaneously actuating a twin gear (22b) included by a respective adjacent shaft (22') likewise actuating a transmission chain (22d) coplanar with the previous transmission chain (22c).

Said chains (22c) and (22d) move respective parallel shafts (19) and (19') laterally located with respect to the driving (22) and concatenated (22') shafts in a synchronized manner by reverse rotation, all of them arranged on a lower support (41) parallel to the upper one (43). Said chains (22c) and (22d) are provided with corresponding tensing means (22e) and (22f) which are eccentric cams located on fixed, tangent vertical rods, assembled between said supports (41) and (43). The shafts (19) and (19') have extensions joined to respective rotating resinning platforms (23) and (23') rotating due to the same actuation and in a synchronized and reverse manner, thus preventing possible risks of friction between the arms thereof. Rotating platforms (23) and (23') have the corresponding crossarm (26) and (26') at the base, provided with extendible arms (30) and (30') which have fixed flexible scrapers (35) and (35') distributing the layer of resin on the surface of the slabs, construction pieces or the like (P) and (P') driven by the common conveyer (2).

A resin product is deposited on the slabs (P) and (P') through said shafts (19) and (19') which are tubular shafts fed by the conduits (18) and (18') coming from the deposit/deposits (14), provided with nozzles (17) and (17') and dosing electro-valves (15) and (15'). The deposit/deposits (14) are located on the upper level of the machine, which is supported by known columns (3) and (4) and more specifically in the upper part of the set of plug screw spindles (28) on gearboxes (27) which have the rotating mechanism of said screw spindle actuated by the corresponding control wheel (9) and handle (10), located on a side of one of said gearboxes (27), connecting to each other by means of a transversal bar (11). The gearboxes (27), for example are composed of a set of vertical and horizontal bevel pinions (27') and (27'') respectively located on the connecting bar (11) and on the screw spindles (28) moving the mobile part (6) up or down on the fixed coaxial part (5) of said support columns (3) and (4) when actuated.

The machine assembly is completed with the attaching flanges (42) of the upper support (43) and the attaching flanges (40) of the lower support (41) to the mobile part (6) of the columns (3) and (4); the socket screw spindle (29) of said mobile part (6); the general bedplate (1); the casing body (12); the ceiling (13) of said casing and the tracks (24) and (25) of the corresponding platforms (P) and (P')

The machine can optionally be equipped with a single deposit (14) with two conduits (18) and (18'), with respective dosing electro-valves (15) and (15'); with a single deposit (14) with a single conduit (18), electro-valve (15) and by pass (18a) and (18b); with a double deposit (14) and (14') with two conduits (18) and (18') and electro-valves (15) and (15'), and with a double deposit (14) and (14') with a single conduit (18), electro-valve (15) and by pass (18a) and (18b), according to that shown in figures 3.1 to 6.1, respectively.

Having conveniently described the nature of the invention, for the relevant purposes it is stated that it is not limited to the exact details of this description, but on the contrary, modifications considered relevant will be introduced provided they do not change the basic features thereof, claimed below.

## Claims

1. A MACHINE FOR THE AUTOMATIC RESINNING OF BOARDS OR FLAT PARTS FOR CONSTRUCTION, assembled over the bedplate of a roller conveyor leading the boards or slabs beneath a rotating resinning device and which is **CHARACTERISED in that** said machine is supported by a set of columns (3), (4), consisting of a fixed part (5), pivoted and rotational over the lower end (7) on the support foot (8) and another mobile or displaceable part (6) guided telescopically in the above and among whose mobile parts (6) there is a chassis (41), leaning on both supports (40) foreseen in the mobile parts (6) and providing a driving equipment (20) and respective reducer (21) from which the corresponding rotation shaft (22) is projected for the resinning device which is fed through said shaft (22).

2. A MACHINE FOR THE AUTOMATIC RESINNING OF BOARDS OR FLAT PARTS FOR CONSTRUCTION according to claim 1, a version of the double function machine is **CHARACTERISED in that** it comprises two rotating resinning platforms (23) and (23') located on the same actuation plane, synchronised and of respectively reversed rotation produced through corresponding tubular shafts (19) and (19') which are actuated by transmission chain means (22c) and (22d) and these by respective axial (22) and adjacent (22') drive shafts, concatenated by mans of gears (22a) joined to the axial drive shaft (22), and gear (22b) joined to the adjacent shaft (22').

3. A MACHINE FOR THE AUTOMATIC RESINNING OF BOARDS OR FLAT PARTS FOR CONSTRUCTION according to claim 1, a rotation shaft (22) of the resinning device, **CHARACTERISED in that** said rotation shaft (22) is a tubular shaft fitted on a circular platform (23), of a passing manner, open at the upper and lower ends of this shaft (22) across which a resin feeding conduit (18) coaxially passes, and which is filled by a nozzle (17) through an upper conduit (16) controlled by a set of electro-valves (15) which discharge from a deposit (14) a fixed quantity of adjusted and proportional resin over the board or slab (P), dragged by the conveyor rollers (2) which in turn pass beneath the rotating circular platform (23), actuating a rod probe (44) triggering said electro-valves (15).

4. A MACHINE FOR THE AUTOMATIC RESINNING OF BOARDS OR FLAT PARTS FOR CONSTRUCTION according to claim 3, a resinning device integrated by a rotating circular platform (23), **CHARACTERISED in that** said platform (23) beneath, consists of a set of tubular section arms (26), radially equidistant, housing two "T" shaped bars (30) fastened by adjustable side bolts (31) which in the vertical section (32) of this "T" provides seizing bolts (33) which, together with some parallel strips (34) flange and fasten by clamping two scrapers or trowels (35) of a resistant and anti-corrosive elastomeric material whose lower edge has a chamfer (36), preferably 45°, in the circular platform (23) rotation direction.

5. A MACHINE FOR THE AUTOMATIC RESINNING OF BOARDS OR FLAT PARTS FOR CONSTRUCTION according to claim 1, some adjustable columns (3), (4) consisting of a fixed part (5) and a telescopically fitted mobile part (6), **CHARACTERISED in that** the fixed part (5) has a part in plug screw spindle (28) and the mobile part (6) a part in socket screw spindle (29) assembled such that by means of an actuation steering wheel (9) and corresponding manual adaptation (10) or optional mechanical, a chain or similar transmission (11) is actuated, which by means of crowns (27) moves, in a synchronised manner, the fixed parts (5) of each column (3), (4) and these in turn the mobile parts (6) to determine the suitable height of the resinning device (23) in relation to the slab or board (P).

6. A MACHINE FOR THE AUTOMATIC RESINNING OF BOARDS OR FLAT PARTS FOR CONSTRUCTION according to claim 2, said actuating tubular shafts (19) and (19') and said drive shafts (22) and (22') are **CHARACTERISED in that** said shafts (19, 19'; 22 and 22') are assembled between an intermediate support (41) and another upper one (43) on which the driving motor (20) corresponding reducer (21) are arranged, actuating the axial shaft (22), whose supports (41 and 43) are vertically shiftable with the movement of the columns (3 and 4).

7. A MACHINE FOR THE AUTOMATIC RESINNING OF BOARDS OR FLAT PARTS FOR CONSTRUCTION according to claim 2, the transmission chains (22c) and (22d) are **CHARACTERISED in that** said transmission chains are provided with tensing means composed of adjustable eccentric cams (22e) and (22f) respectively, on corresponding shafts assembled between said supports (41) and (43).

8. A MACHINE FOR THE AUTOMATIC RESINNING OF BOARDS OR FLAT PARTS FOR CONSTRUCTION according to claim 2, the tubular rotation shafts (19) and (19') are **CHARACTERISED in that** said shafts are fed through corresponding tubes (18) and (18') provided with respective dosing electro-valve (15) and (15') of a single deposit (14).

9. A MACHINE FOR THE AUTOMATIC RESINNING OF BOARDS OR FLAT PARTS FOR CONSTRUCTION according to claim 8, the tubular rotation shafts (19) and (19') are **CHARACTERISED in that** said shafts are fed through a corresponding tube (18) provided with respective dosing electro-valve (15) and by pass (18a-18b) of a single deposit (14).

10. A MACHINE FOR THE AUTOMATIC RESINNING OF BOARDS OR FLAT PARTS FOR CONSTRUCTION according to claims 8 and 9, the tubular rotation shafts (19) and (19') are **CHARACTERISED in that** said shafts are fed through corresponding tubes (18) and (18') provided with respective dosing electro-valve (15) and (15') of a double deposit (14) and (14').

11. A MACHINE FOR THE AUTOMATIC RESINNING OF BOARDS OR FLAT PARTS FOR CONSTRUCTION according to claims 8 to 10, the tubular rotation shafts (19) and (19') are **CHARACTERISED in that** said shafts are fed through a corresponding tube (18) provided with respective dosing electro-valve (15) and by pass (18a-18b) of a double deposit (14) and (14').

12. A MACHINE FOR THE AUTOMATIC RESINNING OF BOARDS OR FLAT PARTS FOR CONSTRUCTION according to claim 6, in which the shifting of the columns (2) and (3) by means of their mobile part (6) and screw spindle (28) is **CHARACTERIZED in that** said shifting is carried out by means of gearboxes (27) located on the ends of each screw spindle (28), composed of a set of vertical (27') and horizontal (27'') bevel pinions joined by a transmission bar (11) actuated by the corresponding wheel (9) and handle (10) arranged on an end of the bar (11) on the respective side of the body of the machine.
